# EUROPÄISCHE PATENTSCHRIFT

(11) **EP 1 927 608 B1**
(45) Veröffentlichungstag und Bekanntmachung des Hinweises auf die Patenterteilung: **16.09.2009**
(21) Anmeldenummer: 07022350.8
(22) Anmeldetag: 17.11.2007
(51) Int. Cl.: C08G 18/38, C08G 18/08

(54) **Selbstverlöschende, thermoplastische Polyurethane, ein Verfahren zu deren Herstellung und deren Verwendung**
Self-extinguishing thermoplastic polyurethanes, method for their manufacture and their application
Polyuréthanes thermoplastiques auto extinguibles, procédé pour leur fabrication et leur utilisation

(30) Priorität: 30.11.2006 DE 102006056522
(43) Veröffentlichungstag der Anmeldung: 04.06.2008
(73) Patentinhaber: Bayer MaterialScience AG, 51368 Leverkusen (DE)
(72) Erfinder: Peerlings, Henricus, Dr., 42699 Solingen (DE); Winkler,Juergen, 40764 Langenfeld (DE)

(56) Entgegenhaltungen:
- EP-A- 1 394 189
- US-A- 5 837 760

## Beschreibung

Die vorliegende Erfindung betrifft selbstverlöschende, thermoplastische Polyurethane, ein Verfahren zu ihrer Herstellung sowie ihre Verwendung.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponenten in einer Stufe (One-shot-Dosierverfahren) erfolgen.

Ein Nachteil der TPU ist ihre leichte Entflammbarkeit. Zur Verminderung dieses Nachteils werden den TPU Flammschutzmittel, wie beispielsweise halogenhaltige Verbindungen, einverleibt. Der Zusatz dieser Produkte wirkt sich jedoch vielfach negativ auf die mechanischen Eigenschaften der erhaltenen TPU-Formmassen aus. Auch sind aufgrund der korrosiven Wirkung der halogenhaltigen Substanzen halogenfreie selbstverlöschende TPU-Formmassen erstrebenswert.

In EP-B 0 617 079 wird der Einsatz einer Kombination aus einem Phosphat und/oder Phosphonat mit Melamincyanurat beschrieben.

Vor allem wenn die TPU im Bereich Elektrik/Elektronik, insbesondere in Kabeln eingesetzt werden, müssen hohe Anforderungen erfüllt werden. Häufig wird in Kabeln leicht brennbares, nicht-flammgeschütztes Polyolefin (z.B. Polypropylen) eingesetzt, wodurch dem TPU zusätzlich zur eigenen Flammwidrigkeit die Aufgabe zufällt, dieses Polyolefin mit zu löschen. Diese hohen Anforderungen, insbesondere bei einer dünnen Wanddicke der TPU Ummantelung bei gleichzeitig guter Extrudierbarkeit werden durch die bekannten TPU-Materialien nicht erfüllt.

Aufgabe der vorliegenden Erfindung war es daher, selbstverlöschende thermoplastische Polyurethane zur Verfügung zu stellen, die als Kabelummantelungsmaterial keine halogenhaltigen Flammschutzmittel enthalten, nach Entzündung mit einer heißen Flamme in wenigen Sekunden nicht brennend verlöschen und nicht abtropfen bzw. nicht brennend abtropfen und dabei gleichzeitig gute Verarbeitungseigenschaften (gute mechanische Eigenschaften und gute Extrusionsqualität) aufweisen.

Diese Aufgabe konnte dadurch gelöst werden, dass zur Flammfestausrüstung das TPU eine Mischung aus organischen, einbaufähigen Phosphinoxiden und Melaminderivaten und ggf. zusätzlichen Flammschutzmitteln enthält.

Gegenstand der Erfindung sind daher selbstverlöschende, thermoplastische Polyurethane, die als Flammschutzmittel mindestens ein organisches, einbaufähiges Phosphinoxid sowie mindestens ein Melaminderivat, bevorzugt Melamincyanurat und gegebenenfalls zusätzliche Flammschutzmittel und gegebenenfalls weitere Zusatzstoffe und/oder Hilsmittel enthalten.

Ein weiterer Gegenstand der Erfindung ist ein Verfahren zur Herstellung der erfindungsgemäßen, selbstverlöschenden, thermoplastischen Polyurethane, wobei
A) organische und/oder modifizierte organische Diisocyanate (a)
   mit
B) Polyhydroxylverbindungen (b), insbesondere im wesentlichen difunktionellen Polyhydroxylverbindungen
   und
C) Kettenverlängerungsmitteln (c)
   in Gegenwart von
D) Flammschutzmitteln (d)
   und gegebenenenfalls
E) Katalysatoren (e),
F) Kettenabbrechern (f),
G) Hilfsmitteln und/oder Zusatzstoffen (g)
   umgesetzt werden, wobei
   als Flammschutzmittel (d) mindestens ein organisches, einbaufähiges Phosphinoxid und mindestens ein Melaminderivat, bevorzugt Melamincyanurat und gegebenenfalls zusätzliche Flammschutzmittel eingesetzt werden.

Das Melaminderivat kann gegebenenfalls auch nachträglich über eine Kompoundierung dem fertigen TPU zugegeben werden.

Bei den thermoplastischen Polyurethanen (kurz auch TPU genannt) handelt es sich um im wesentlichen lineare, thermoplastisch verarbeitbare Polyurethane.

Es war überraschend und in keiner Weise vorhersehbar, dass durch die Verwendung von organischen, einbaufähigen Phosphinoxiden in Kombination mit Melaminderivaten selbstverlöschende TPU-Formmassen erhalten werden konnten, die zudem sehr gute mechanische und verarbeitungs- und anwendungstechnische Eigenschaften aufweisen.

Für die erfindungsgemäße "Flammfestausrüstung" eignen sich prinzipiell alle an sich bekannten TPU, die nach den an sich üblichen Verfahren hergestellt werden können.

Bevorzugt sind die TPU aus folgenden Komponenten aufgebaut:

Als organische Diisocyanate (a) können aliphatische, cycloaliphatische, araliphatische, aromatische und heterocyclische Diisocyanate oder beliebige Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im einzelnen seien beispielhaft genannt: aliphatische Diisocyanate wie Ethylendiisocyanat, 1,4-Tetramethylendiisocyanat, 1,6-Hexamethylendiisocyanat, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Polyhydroxylverbindungen oder Polyole (b) sind solche mit im Mittel mindestens 1,8 bis höchstens 3,0 zerewitinoff-aktiven Wasserstoffatomen und einem zahlenmittleren Molekulargewicht M̅ₙ von 450 bis 10000, bevorzugt 450 bis 6000. Produktionsbedingt enthalten diese oft kleine Mengen an nicht-linearen Verbindungen. Häufig spricht man daher auch von "im Wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im wesentlichen linearen Polyether-Diole besitzen vorzugsweise zahlenmittlere Molekulargewichte M̅ₙ von 450 bis 6000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte M̅ₙ von 450 bis 10000 und können einzeln oder in Form von Mischungen untereinander zur Anwendung kommen.

Kettenverlängerungsmittel (c) besitzen im Mittel 1,8 bis 3,0 zerewitinoffaktive Wasserstoffatome und haben ein Molekulargewicht von 60 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Als Flammschutzmittel (d) wird ein einbaufähiges Phosphinoxid in Kombination mit einem Melaminderivat eingesetzt.

Das Phosphinoxid besitzt im Mittel mindestens 1,5 und höchstens 3,0, bevorzugt 1,8 bis 2,5, besonders bevorzugt 1,95 bis 2,10 zerewitinoffaktive Wasserstoffatome. Diese zerewitinoffaktiven Wasserstoffatome sind vorzugsweise in Hydroxyl- und Amingruppen von Alkoholen bzw. Aminen enthalten.

Das Phosphinoxid hat ein zahlenmittleres Molekulargewicht M̅ₙ von 60 bis 1000.

Bevorzugt wird als Phosphinoxid eine Verbindung der allgemeinen Formel (I) eingesetzt: 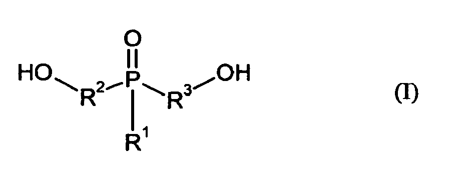 mit
- R¹ =: H, verzweigte oder unverzweigte Alkylreste mit 1 bis 12 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
- R², R³ =: verzweigte oder unverzweigte Alkylenreste mit 1 bis 24 C-Atomen, substituierte oder nicht-substituierte Alkarylenreste mit 6 bis 30 C-Atomen, wobei R² und R³ gleich oder verschieden sein können.

Das Phosphinoxid kommt vorzugsweise in einer Menge von 0,1 bis 20, bevorzugt 1 bis 12, Gew.-%, bezogen auf die Gesamtmenge an TPU, zum Einsatz.

Als Melaminderivat wird bevorzugt Melamincyanurat eingesetzt. Das Melamincyanurat kann in handelsüblicher Form eingesetzt werden.

Gegebenenfalls können auch zusätzliche Flammschutzmittel (ausgenommen Melaminderivate und Phosphinoxide) zum Einsatz kommen, wie z.B. Phosphate und/oder Phosphonate. Für eine Übersicht siehe z.B. H. Zweifel, Plastics Additives Handbook, 5th Ed., Hanser Verlag München, 2001, Kapitel 12; J. Green, J. of Fire Sciences, 1997, 15, S. 52-67 oder Kirk-Othmer Encyclopedia of Chemical Technology, 4th Ed., Vol. 10, John Wiley & Sons, New York, S. 930-998.

Geeignete Katalysatoren (e) sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den erfindungsgemäßen TPU beträgt in der Regel etwa 0 bis 5 Gew.-%, bevorzugt 0 bis 2 Gew.-%, bezogen auf die Gesamtmenge an TPU.

Gegenüber Isocyanaten monofunktionelle Verbindungen (f) können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die erfindungsgemäßen, thermoplastischen Polyurethanelastomere können Hilfs- und Zusatzstoffe (g) in Mengen bis zu maximal 20 Gew.-%, bezogen auf die Gesamtmenge an TPU, enthalten. Typische Hilfs- und Zusatzstoffe, sind Gleitmittel und Entformungsmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Farbstoffe, Pigmente, anorganische und/oder organische Füllstoffe, Weichmacher, wie Phosphate, Phthalate, Adipate, Sebacate und Alkylsulfonsäureester, fungistatisch und bakteriostatisch wirkende Substanzen sowie Füllstoffe und deren Mischungen und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder der DE-A 29 01 774 zu entnehmen.

Zur Herstellung der erfindungegemäßen TPU werden die Komponenten (a), (b), (c) und ggf. (f) in Gegenwart des erfindungsgemäßen Flammschutzmittels (d) und ggf. der Katalysatoren (e) und der Hilfsmittel und/oder Zusatzstoffe (g) in solchen Mengen zur Reaktion gebracht, dass das Äquivalenzverhältnis von NCO Gruppen der Diisocyanate (a) zur Summe der zerewitinoffaktiven Wasserstoffatome enthaltenden Komponenten (b), (c), (d) und (f) 0,9:1 bis 1,1:1 beträgt. Das Phosphinoxid des Flammschutzmittels (d) ist dabei in jedem fall während der Reaktion der Aufbaukomponenten (a), (b) und (c) anwesend, während das Melaminderivat auch nachträglich dem TPU zugegeben werden kann.

Die erfindungsgemäßen selbstverlöschenden TPU enthalten üblicherweise, jeweils bezogen auf die Gesamtmenge an TPU 0,1 bis 20 Gew.-%, vorzugsweise 1 bis 12 Gew.-% Phosphinoxid und 5 bis 50 Gew.-%, vorzugsweise 10 bis 40 Gew.-% Melaminderivat.

Die erfindungsgemäßen TPU-Formmassen sind selbstverlöschend, tropfen nicht bzw. tropfen nicht brennend ab und weisen gute mechanische Eigenschaften und Verarbeitungseigenschaften auf.

Das erfindungsgemäße TPU kann gegebenenfalls weiter bearbeitet werden, z.B. durch Temperung des TPU zur Herstellung von Platten oder Blöcken, durch Zerkleinerung oder Granulierung in Schreddern oder Mühlen, durch Entgasung sowie Granulierung unter Aufschmelzen. Bevorzugt wird das TPU durch ein Aggregat zur kontinuierlichen Entgasung und Strangbildung geführt. Bei diesem Aggregat kann es sich z.B. um eine Mehrwellenschneckenmaschine (ZSK) handeln.

Die erfindungsgemäßen TPU werden bevorzugt zur Herstellung von Spritzgießartikeln und Extrusionsartikeln eingesetzt.

Die Erfindung soll anhand der nachfolgenden Beispiele näher erläutert werden.

### Beispiele

Im Folgenden verwendete Abkürzungen:
- Terathane^{®} 1000: Polyether mit einem Molekulargewicht von Mₙ = 1000 g/mol; Produkt der Firma Du Pont de Nemours
- MDI: Methylen-4,4'-(Phenylisocyanat)
- IHPO: Isobutyl-bis(Hydroxypropyl)-Phosphinoxid, Flammschutzmittel
- BDO: 1,4-Butandiol
- Irganox^{®} 1010: Tetrakis(methylen-(3,5-di-tert.-butyl-4-hydroxycinnamate))methan der Firma Ciba Specialty Chemicals Inc.
- Licowax^{®}C: Trennmittel der Firma Clariant Würtz GmbH
- MC: Melamincyanurat, Flammschutzmittel
- BDP: Bisphenol A Diphenylphosphat, oligomeres Gemisch
- Exolit^{®} OP 910: Flammschutzmittel auf Basis Phosphonat der Firma Clariant GmbH (ohne zerewitinoffaktiven Wasserstoffatomen).

### Beispiel 1 (Vergleich)

Es wurde ein TPU-Formkörper mit einer Shore A Härte von 85 hergestellt. Dazu wurde ein Gemisch aus 1159 g Terathane® 1000, 139 g BDO, 110 g Exolit® OP 910, 110 g BDP, 7 g Irganox® 1010 und 10 g Licowax® C unter Rühren mit einem Flügelrührer mit einer Drehzahl von 500 Umdrehungen pro Minute (UpM) auf 160°C hochgeheizt. Danach wurden 684 g MDI zugegeben. Anschließend wurde 110 Sekunden gerührt und das TPU ausgegossen. Abschließend wurde das Material 30 min. bei 80°C nachbehandelt. Das fertige TPU wurde geschnitten, granuliert und weiter verarbeitet.

### Beispiel 2 (Vergleich)

Es wurde ein TPU-Formkörper mit einer Shore A Härte von 85 nach hergestellt. Dazu wurde ein Gemisch aus 1159 g Terathane® 1000, 139 g BDO, 220 g Exolit® OP 910, 7 g Irganox® 1010 und 10 g Licowax® C unter Rühren mit einem Flügelrührer mit einer Drehzahl von 500 Umdrehungen pro Minute (UpM) auf 160°C hochgeheizt. Danach wurden 684 g MDI zugegeben. Anschließend wurde 110 Sekunden gerührt und das TPU ausgegossen. Abschließend wurde das Material 30 min. bei 80°C nachbehandelt. Das fertige TPU wurde geschnitten, granuliert und weiter verarbeitet.

### Beispiel 3 (erfindungsgemäß)

Terathane® 1000 (650 g/min), in dem BDP (10 Gew.-% bezogen auf die Gesamtmenge an TPU), Irganox® 1010 (0,4 Gew.-% bezogen auf die Gesamtmenge an TPU) und Zinndioctoat (100 ppm bezogen auf die Menge an Terathane® 1000) gelöst waren, wurde auf 180°C erhitzt und mittels einer Zahnradpumpe kontinuierlich in das erste Gehäuse einer ZSK 53 (Zweiwellenextruder der Firma Werner&Pfleiderer) dosiert.

In dasselbe Gehäuse wurden Butandiol (98 g/min) und IHPO (51 g/min; 60°C) gemeinsam mit Licowax® C (5 g/min; 0,4 Gew.-% bezogen auf die Gesamtmenge an TPU) kontinuierlich eindosiert.

In das Gehäuse 3 wurde anschließend Desmodur® 44 M (461 g/min) kontinuierlich eindosiert.

Die Gehäuse 1 bis 3 des Extruders waren auf 80°C und die Gehäuse 4 bis 8 auf 220 bis 230 °C erhitzt, während die letzten 4 Gehäuse gekühlt wurden. Die Drehzahl der Schnecke betrug 290 U/min.

Am Ende der Schnecke wurde die heiße Schmelze als Strang abgezogen, im Wasserbad gekühlt und granuliert.

### Beispiel 4 (erfindungsgemäß)

Terathane® 1000 (600g/min.), in dem Irganox® 1010 (0,4 Gew.-% bezogen auf die Gesamtmenge an TPU) und Zinndioctoat (100 ppm bezogen auf die Menge an Terathane® 1000) gelöst war, wurde auf 180°C erhitzt und mittels einer Zahnradpumpe kontinuierlich in das erste Gehäuse einer ZSK 53 (Zweiwellenextruder der Firma Werner&Pfleiderer) dosiert.

In dasselbe Gehäuse wurden Butandiol (106g/min.) und IHPO (52g/min.; 60°C) gemeinsam mit Licowax® C (5g/min.; 0,4 Gew.-% bezogen auf die Gesamtmenge an TPU) kontinuierlich eindosiert.

In das Gehäuse 3 wurde anschließend Desmodur® 44 M (508g/min.) kontinuierlich eindosiert. Die Gehäuse 1 bis 3 des Extruders waren auf 80°C und die Gehäuse 4 bis 8 auf 220 bis 230 °C erhitzt, während die letzten 4 Gehäuse gekühlt wurden. Die Drehzahl der Schnecke betrug 290 U/min.

Am Ende der Schnecke wurde die heiße Schmelze als Strang abgezogen, im Wasserbad gekühlt und granuliert.

### Beispiel 5 (erfindungsgemäß)

Terathane® 1000 (550 g/min), in dem Irganox® 1010 (0,4 Gew.-% bezogen auf die Gesamtmenge TPU) und Zinndioctoat (100 ppm bezogen auf die Menge Terathane® 1000) gelöst waren, wurde auf 180°C erhitzt und mittels einer Zahnradpumpe kontinuierlich in das erste Gehäuse einer ZSK 53 (Zweiwellenextruder der Firma Werner&Pfleiderer) dosiert.

In dasselbe Gehäuse wurden Butandiol (107 g/min) und IHPO (78 g/min; 60°C) gemeinsam mit Licowax® C (5 g/min; 0,4 Gew.-% bezogen auf die Gesamtmenge an TPU) kontinuierlich eindosiert.

In das Gehäuse 3 wurde anschließend Desmodur® 44 M (517 g/min) kontinuierlich eindosiert.

Die Gehäuse 1 bis 3 des Extruders waren auf 80°C und die Gehäuse 4 bis 8 auf 220 bis 230 °C erhitzt, während die letzten 4 Gehäuse gekühlt wurden. Die Drehzahl der Schnecke betrug 290 U/min.

Am Ende der Schnecke wurde die heiße Schmelze als Strang abgezogen, im Wasserbad gekühlt und granuliert.

### Reextrusion

Zu den in den Beispielen hergestellten TPU-Granulaten wurde jeweils MC (Mengenangaben siehe Tabelle 1) zugegeben. Es wurde auf einem Extruder des Typs DSE 25, 4 Z, 360 Nm, der folgenden Aufbau aufweist:
1. kalte Einzugszone mit Förderelementen,
2. erste Heizzone (175°C) mit erster Knetzone,
3. zweite Heizzone (185°C) mit Förderelemente und zeiter Knetzone,
4. dritte Heizzone (190°C) mit Knetzone, Förderelemente und Vakuumentgasung,
5. Umlenkkopf (195°C) und Düse (190°C),
mit einer Förderleistung von 10 kg/h bei einer Drehzahl von 220 U/min reextrudiert und anschließend mit einem Strang-Granulator zu Granulat aufgearbeitet.

### Kabelherstellung

Die reextrudierten Granulate wurden auf einem Extruder unter Einarbeiten eines drei-adrigen polypropylen(PP)-basierten Kabels zu entsprechenden Kabelaufbauten verarbeitet. Der Gesamtkabeldurchmesser betrug in allen Fällen 7,8 mm. An diesen so hergestellten Kabeln wurde die Mechanik nach EN 60811-1-1 und die flammwidrigen Eigenschaften nach UL-1581 ermittelt.

### Ermittlung der Flammschutzeigenschaften

Die Flammschutzeigenschaften wurden gemäß UL-1581 ermittelt, wobei das obig beschriebene gefertigte Kabel drei mal eine Minute beflammt wird, wobei das Kabel den Test besteht wenn ein Papierfähnchen, welches sich 250 mm oberhalb der Flammenkegel befindet nicht verbrannt sein darf und die Nachbrennzeit nach der letzten Beflammung weniger als eine Minute beträgt.

**Tabelle 1: Ergebnisse:**

| **Beispiel** | **Art des Beispiels** | **IHPO (%)** | **MC (%)** | **Phosphat (%)** | **Phosphonat (%)** | **Reißfestigkeit (MPa)** | **Reißdehnung (%)** | **Extrusionsqualität** | **UL-1581** |
|---|---|---|---|---|---|---|---|---|---|
| **1** | Vergleich | 0 | 25 | 5 | 5 | 21 | 430 | Nicht mehr weiter verfolgt, da zu starkes Ausblühen | |
| **2** | Vergleich | 0 | 25 | 10 | 0 | 20 | 420 | Ablagerung an der Düse | Nicht bestanden |
| **3** | Erfindungsgemäß | 4 | 25 | 10 | 0 | 25 | 376 | Gut, homogen | Bestanden |
| **4** | Erfindungsgemäß | 4 | 30 | 0 | 0 | 15 | 265 | Gut, homogen | Bestanden |
| **5** | Erfindungsgemäß | 6 | 27 | 0 | 0 | 18 | 312 | Gut, homogen | Bestanden |

Im erfindungsgemäßen Beispiel 3 wurde eine Kombination aus einem Phosphat und einem Phosphinoxid mit Melamincyanurat verwendet. Mit dieser Flammschutzkombination wurden die Flammschutzeigenschaften nach UL-1581 erfüllt. Außerdem weist das TPU gute Extrusionsqualität und sehr gute mechanische Eigenschaften auf.

In den erfindungsgemäßen Beispielen 4 und 5 wurden eine Kombination aus Phosphinoxid mit Melamincyanurat eingesetzt. Die TPUs bestanden den Flammtest und wiesen eine gute Extrusionsqualität auf.

## Patentansprüche

1. Selbstverlöschende, thermoplastische Polyurethane, die als Flammschutzmittel mindestens ein organisches, einbaufähiges Phosphinoxid mit der allgemeinen Formel (I) 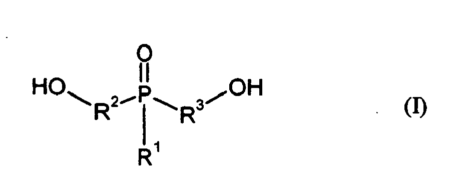 wobei
R¹ = H, verzweigte oder unverzweigte Alkylreste mit 1 bis 12 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
R², R³= verzweigte oder unverzweigte Alkylenreste mit 1 bis 24 C-Atomen, substituierte oder nicht-substituierte Alkarylenreste mit 6 bis 30 C-Atomen, wobei R² und R³ gleich oder verschieden sein können
und mindestens ein Melaminderivat, bevorzugt Melamincyanurat und gegebenenfalls zusätzliche Flammschutzmittel und gegebenenfalls weitere Zusatzstoffe und/oder Hilfsmittel enthalten.

2. Selbstverlöschende, thermoplastische Polyurethane nach Anspruch 1, **dadurch gekennzeichnet, dass** sie, jeweils bezogen auf die Gesamtmenge an TPU, 2 bis 20 Gew.%, vorzugsweise 2 bis 12 Gew.-% organisches, einbaufähiges Phosphinoxid und 5 bis 50 Gew.-%, vorzugsweise 10 bis 40 Gew.%, Melaminderivat, enthalten.

3. Verfahren zur Herstellung von selbstverlöschenden, thermoplastischen Polyurethanen gemäß einem der Ansprüche 1 oder 2, wobei
A) organische und/oder modifizierte organische Diisocyanate (a) mit
B) Polyhydroxylverbindungen (b), insbesondere im wesentlichen difunktionellen Polyhydroxylverbindungen und
C) Kettenverlängerungsmitteln in Gegenwart von
D) Flammschutzmitteln (d) sowie gegebenenenfalls
E) Katalysatoren (e)
F) Kettenabbrechern (f)
G) Hilfsmitteln und/oder Zusatzstoffen (g)
umgesetzt werden, wobei als Flammschutzmittel (d) mindestens ein organisches, einbaufähiges Phosphinoxid mit der allgemeinen Formel (I) 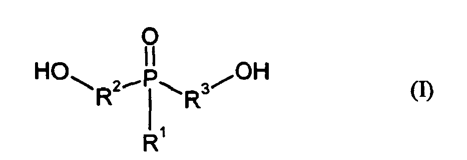
wobei
R¹ = H, verzweigte oder unverzweigte Alkylreste mit 1 bis 12 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
R², R³ = verzweigte oder unverzweigte Alkylenreste mit 1 bis 24 C-Atomen, substituierte oder nicht-substituierte Alkarylenreste mit 6 bis 30 C-Atomen, wobei R² und R³ gleich oder verschieden sein können
und mindestens ein Melaminderivat, bevorzugt Melamincyanurat und gegebenenfalls zusätzliche Flammschutzmittel eingesetzt werden.

4. Verwendung der selbstverlöschenden, thermoplastischen Polyurethane gemäß den Ansprüchen 1 bis 3 zur Herstellung von Spritzgießartikeln und Extrusionsartikeln.

## Claims

1. Self-extinguishing thermoplastic polyurethanes which contain as the flame retardant at least one organic incorporable phosphine oxide of the general formula (I) 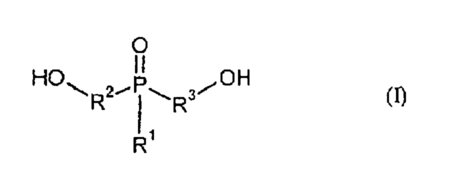 wherein
R¹ = H, branched or unbranched alkyl radicals with 1 to 12 C atoms, substituted or non-substituted aryl radicals with 6 to 20 C atoms, substituted or non-substituted aralkyl radicals with 6 to 30 C atoms, substituted or non-substituted alkaryl radicals with 6 to 30 C atoms,
R², R³ = branched or unbranched alkylene radicals with 1 to 24 C atoms, substituted or non-substituted alkarylene radicals with 6 to 30 C atoms, wherein R² and R³ can be the same or different
and at least one melamine derivative, preferably melamine cyanurate and optionally additional flame retardants and optionally other additives and/or auxiliary substances.

2. Self-extinguishing thermoplastic polyurethanes according to claim 1, **characterised in that** they, in each case based on the total quantity of TPU, contain 2 to 20 wt.%, preferably 2 to 12 wt.%, organic incorporable phosphine oxide and 5 to 50 wt.%, preferably 10 to 40 wt.%, melamine derivative.

3. Process for the production of self-extinguishing thermoplastic polyurethanes according to one of claims 1 or 2, wherein
A) organic and/or modified organic diisocyanates (a) are reacted with
B) polyhydroxyl compounds (b), in particular substantially difunctional polyhydroxyl compounds and
C) chain extenders in the presence of
D) flame retardants (d) and optionally
E) catalysts (e)
F) chain terminators (f)
G) auxiliary substances and/or additives (g)
wherein at least one organic incorporable phosphine oxide of the general formula (I) 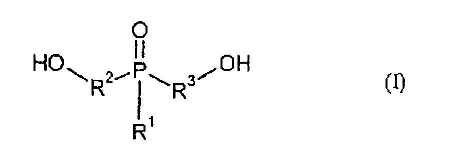 wherein
R¹ = H, branched or unbranched alkyl radicals with 1 to 12 C atoms, substituted or non-substituted aryl radicals with 6 to 20 C atoms, substituted or non-substituted aralkyl radicals with 6 to 30 C atoms, substituted or non-substituted alkaryl radicals with 6 to 30 C atoms,
R², R³ = branched or unbranched alkylene radicals with 1 to 24 C atoms, substituted or non-substituted alkarylene radicals with 6 to 30 C atoms, wherein R² and R³ can be the same or different
and at least one melamine derivative, preferably melamine cyanurate and optionally additional flame retardants are used as the flame retardant (d).

4. Use of the self-extinguishing thermoplastic polyurethanes according to claims 1 to 3 for the production of injection moulded articles and extrusion articles.

## Revendications

1. Polyuréthanes thermoplastiques auto-extincteurs qui contiennent comme ignifugeant au moins un oxyde de phosphine organique incorporable de formule générale (I) 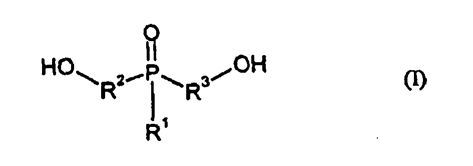 dans laquelle
R¹ = H, des groupements alkyle ramifiés ou non ramifiés ayant 1 à 12 atomes C, des groupements aryle substitués ou non substitués ayant 6 à 20 atomes C, des groupements aralkyle substitués ou non substitués ayant 6 à 30 atomes C, des groupements alkylaryle substitués ou non substitués ayant 6 à 30 atomes C,
R², R³ = des groupements alkylène ramifiés ou non ramifiés ayant 1 à 24 atomes C, des groupements alkylarylène substitués ou non substitués ayant 6 à 30 atomes C, où R² et R³ peuvent être identiques ou différents
et au moins un dérivé de mélamine, de préférence le cyanurate de mélamine et éventuellement des ignifugeants supplémentaires et éventuellement d'autres additifs et/ou adjuvants.

2. Polyuréthanes thermoplastiques auto-extincteurs selon la revendication 1 **caractérisés en ce qu'**ils contiennent, à chaque fois par rapport à la quantité totale de TPU, 2 à 20 % en masse, de préférence 2 à 12 % en masse d'oxyde de phosphine organique incorporable et 5 à 50 % en masse, de préférence 10 à 40 % en masse, de dérivé de mélamine.

3. Procédé de production de polyuréthanes thermoplastiques auto-extincteurs selon l'une des revendications 1 et 2, où
A) des diisocyanates organiques et/ou organiques modifiés (a) sont mis à réagir avec
B) des composés polyhydroxylés (b), en particulier des composés polyhydroxylés essentiellement difonctionnels et
C) des agents d'allongement de chaîne en présence
D) d'agents ignifugeants (d) et éventuellement
E) de catalyseurs (e)
F) d'agents d'interruption de chaîne (f)
G) d'adjuvants et/ou d'additifs (g)
où comme agents ignifugeants (d) on utilise au moins un oxyde de phosphine organique incorporable de forme générale (I) 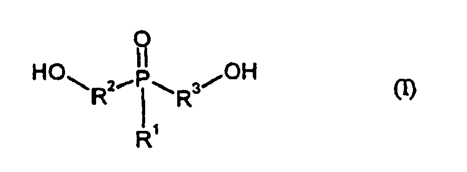 dans laquelle
R¹ = H, des groupements alkyle ramifiés ou non ramifiés ayant 1 à 12 atomes C, des groupements aryle substitués ou non substitués ayant 6 à 20 atomes C, des groupements aralkyle substitués ou non substitués ayant 6 à 30 atomes C, des groupements alkylaryle substitués ou non substitués ayant 6 à 30 atomes C,
R², R³ = des groupements alkylène ramifiés ou non ramifiés ayant 1 à 24 atomes C, des groupements alkylarylène substitués ou non substitués ayant 6 à 30 atomes C, où R² et R³ peuvent être identiques ou différents
et au moins un dérivé de mélamine, de préférence le cyanurate de mélamine et éventuellement des agents ignifugeants supplémentaires.

4. Utilisation des polyuréthanes thermoplastiques auto-extincteurs selon les revendications 1 à 3 pour la production d'articles moulés par injection et d'articles extrudés.
